# EUROPEAN PATENT SPECIFICATION

(11) **EP 0 913 408 B1**
(45) Date of publication and mention of the grant of the patent: **23.07.2003**
(21) Application number: 98308414.6
(22) Date of filing: 15.10.1998
(51) Int. Cl.: C08F 20/12, C08F 291/00, C08L 33/06

(54) **Process for making poly(alkyl (meth)acrylate) rubber latex**
Verfahren zur Herstellung einer Poly(alkyl(meth)acrylat) Kautschuk Latex
Procédé de préparation d'un latex de caoutschouc poly(alkyl(meth)acrylate)

(30) Priority: 31.10.1997 US 962458
(43) Date of publication of application: 06.05.1999
(73) Proprietor: GENERAL ELECTRIC COMPANY, Schenectady, NY 12345 (US)
(72) Inventor: Kuruganti, Vijaya Kumar, Washington, West Virginia 26181 (US); Pickett, James Edward, Schenectady, New York 12304 (US); Slate, James Richard, Vienna, West Virginia 26105 (US); Peascoe, Warren Joseph, Vienna, West Virginia 26105 (US); Kidder, Kevin Reed, Malta, New York 12020 (US); Blohm, Margaret Louise, Schenecdaty, New York 12309 (US); Malandain, Eric Pierre, 60000 Beauvais (FR); Berzinis, Albin Peter, Lenox, Massachusetts 01240 (US); Prince, Gregory Ryan, Sandyville, West Virginia 25275 (US); Gaggar, Satish Kumar, Parkersburg, West Virginia 26101 (US)
(74) Representative: Szary, Anne Catherine, Dr.

(56) References cited:
- EP-A- 0 665 244

## Description

The present invention relates to a process for making a poly(alkyl (meth)acrylate) rubber latex, to a poly(alkyl (meth)acrylate) rubber-based graft copolymer made therefrom and to molding compositions containing the poly(alkyl (meth)acrylate) rubber-based graft copolymer.

Aqueous poly(alkyl acrylate) rubber latices, poly(alkyl acrylate) rubber-based graft copolymers made from such latices and the use of such poly(alkyl acrylate) rubber-based graft copolymers as impact modifiers in molding compositions are each known in the art, see for example, U.S. Patent 3,041,307. Such impact modifiers are said to provide resistance to UV radiation and ozone and to be useful in the manufacture of articles that are to be exposed to outdoor weathering conditions.

EP-A-0665244 discloses an acrylate rubber composition containing an acrylate rubber having a weight average molecular weight of 8 million or more, obtained by emulsion polymerisation of an acrylic ester in the presence of a polymerisation initiator system consisting of an oxidizing agent, a reducing agent and an activator, the proportion of the oxidizing agent being from 0.001 to 0.2 parts by weight per 100 parts by weight of acrylic ester monomers, and in the presence of an emulsifying agent while maintaining the dissolved oxygen concentration of the aqueous phase of the reaction system at lower than the oxygen concentration of a 0.5% aqueous solution of sodium bisulfite.

What is needed is a process for making a poly(alkyl (meth)acrylate) rubber latex that provides efficiency and control of rubber particle size. A poly(alkyl (meth)acrylate) rubber-based graft copolymer that is useful as an impact modifier in molding compositions and that provides resistance to UV radiation is also desired.

### Summary of the Invention

In a first aspect, the present invention is directed to a process for making a poly(alkyl (meth)acrylate) rubber latex, comprising

polymerizing, in a continuous emulsion polymerization process, one or more (C₁-C₁₂)alkyl (meth)acrylate monomers in an aqueous medium in the presence of a surfactant according to the formula:

R-SO₃M

wherein R is alkyl or alkoxyl, and M is a hydrogen radical or a cation.

The continuous process of the present invention provides efficiency relative to a batch process and provides control of rubber particle size.

In a second aspect, the present invention is directed to a graft copolymer, comprising a discontinuous poly(alkyl (meth)acrylate) rubber phase and a rigid thermoplastic resin phase, wherein the poly(alkyl(meth)acrylate) rubber phase is made by the above disclosed process of the present invention and at least a portion of thermoplastic resin phase is chemically grafted to the poly(alkyl (meth)acrylate) rubber phase.

In a third aspect, the present invention is directed to a molding composition comprising a thermoplastic resin and the above disclosed poly(alkyl (meth)acrylate) rubber-based graft copolymer of the present invention, wherein the graft copolymer is present in an amount effective to improve the impact resistance of articles molded from the molding composition.

The graft copolymer and molding composition of the present invention impart improved weatherability to articles molded from the molding composition.

In particular, the present invention is as defined in dependent claims 2-10.

### Brief Description of the Drawings

Figure 1 shows a plot of rubber latex mean particle size versus the time elapsed from the beginning of the flow of a product stream from a continuous emulsion polymerization reactor, as obtained under two different reaction conditions.

Figure 2 shows a plot of rubber latex mean particle size versus the time elapsed from the beginning of the flow of a product stream from a continuous emulsion polymerization reactor, as obtained under three different reaction conditions.

Figure 3 shows a plot of rubber latex mean particle size versus the time elapsed from the beginning of the flow of a product stream from a continuous emulsion polymerization reactor, as obtained under two different reaction conditions.

### Detailed Description of the Invention

### Process For Making A Poly(alkyl (meth)acrylate Rubber Latex

In a preferred embodiment of the process of the present invention, feed streams of reactants and reaction media, including water, a monoethylenically unsaturated alkyl (meth)acrylate monomer, a polyethylenically unsaturated monomer, a surfactant, and a polymerization initiator are continuously fed to a reactor that is maintained under emulsion polymerization conditions and a product stream, in the form of an aqueous poly(alkyl(meth)acrylate) rubber latex, continuously flows from the reactor.

In a preferred embodiment of the process of the present invention, the reactor is operated under "unsteady state" flow conditions during a reactor start-up phase wherein the feed streams are introduced to an initially empty or partially filled reactor to form a reaction mixture, that is, a mixture of reactants and reaction media within the reactor, and the internal volume of the reactor fills with reaction mixture. After the internal volume of the reactor vessel is filled with reaction mixture, further introduction of the feed streams results in flow of a product stream from the reactor. The effluent product stream contains an emulsion of poly(alkyl (meth)acrylate) rubber particles produced by polymerization of the monomers in the reaction mixture under the emulsion polymerization condition in the reactor.

In a more highly preferred embodiment of the process of the present invention, an initial charge of water, surfactant, monoethylenically unsaturated alkyl (meth)acrylate monomer and polyethylenically unsaturated monomer is introduced to a reactor and heated under an inert atmosphere with stirring. An initial charge of a polymerization initiator is then added to the heated, stirred contents of the reactor to bring the reactor contents to emulsion polymerization conditions to begin emulsion polymerization of the monomers in the reaction mixture. Preferably, the initial charge to the reactor occupies from 25% to 75% of the internal volume of the reactor and contains from 0.001 parts by weight ("pbw") to 5.0 pbw surfactant per 100 pbw more monoethylenically unsaturated alkyl (meth)acrylate monomer, 0.01 to 5 pbw polyethylenically unsaturated monomer.

One or more feed streams containing reactants and reaction media, including, water, surfactant, monoethylenically unsaturated alkyl (meth)acrylate monomer, polyethylenically unsaturated monomer and initiator are then continuously fed to the reactor, which is maintained under emulsion polymerization reaction conditions, to polymerize the monomers and thereby form particles of poly(alkyl (meth)acrylate) rubber. Separate feed streams of the reactants and reaction media may be introduced to the reactor or two or more feed streams may be mixed together prior to being introduced to the reactor. In one embodiment, oil soluble reactants, for example, the monoethylenically unsaturated alkyl (meth)acrylate monomers, polyethylenically unsaturated monomer and initiator, are mixed together to form an oil phase feed stream, water soluble reactants, for example, the surfactant, and water are mixed together to form an aqueous phase feed stream and the oil phase and aqueous phase feed streams are mixed together to form a single combined feed stream and the combined feed stream is introduced to the reactor.

Once the flow of product stream from the reactor begins, the reactor is preferably operated under "steady state" flow conditions, wherein flow rate of the product stream flowing from the reactor is equal to the combined flow rate of the feed streams flowing into the reactor. The steady state flow rates of the feed streams and product stream are selected so that the reaction mixture has a steady state residence time under polymerization conditions in the reactor that is effective to drive the polymerization reaction to substantially complete conversion of the monomers in the reaction mixture to poly(alkyl (meth)acrylate rubber particles. In a highly preferred embodiment, the combined steady state flow rate of the feed streams and the steady state flow rate of the product stream are selected so that reaction mixture has a residence time in the reactor of from 30 to 200 minutes, preferably from 60 to 150 minutes, and even more preferably from 90 to 110 minutes. Expressed in another way, the combined steady state flow rate of the feed streams and the steady state flow rate of the product stream are preferably each from 0.3 to 2.0 reactor volumes per hour, more preferably from 0.4 to 1.0 reactor volumes per hour, even more preferably from 0.5 to 0.7 reactor volumes per hour.

In a preferred embodiment, the rubber particles made by the process of the present invention have a weight average particle size of 50 to 800 nm, more preferably, of from 100 to 500 nm, even more preferably from 200 to 300 nm, as measured by light transmission. The size of the rubber particles produced by the process of the present invention may, optionally, be increased by mechanical or chemical agglomeration of the rubber particles, according to known techniques.

Typically, the poly(alkyl (meth)acrylate) rubber particles that are contained in the effluent product stream as the stream begins to flow from the reactor are smaller than desired and the average particle size of the rubber particles in the product stream gradually increases and eventually stabilizes above a desired minimum average particle size.

In a more highly preferred embodiment of the process of the present invention, a reactor start-up procedure is followed wherein:
(a) an initial charge of water, monoethylenically unsaturated alkyl (meth)acrylate monomer, polyethylenically unsaturated monomer and surfactant is introduced to the reactor, wherein (i) the amount of surfactant contained in the initial charge is a non-zero amount of up to 0.5 pbw, more preferably up to 0.2 pbw, surfactant per 100 pbw of the monoethylenically unsaturated alkyl (meth)acrylate monomer in the initial charge, and (ii) the volume of initial charge is from 10 to 75%, more preferably from 20 to 50%, of the internal volume of the reactor,
(b) the contents of the reactor are then heated to a desired reaction temperature,
(c) an initial amount of a polymerization initiator is introduced to the heated contents of the reactor to begin polymerization of the monomers, and
(d) feed streams of reactants and reaction media are then fed to the reactor, wherein, for a first time period that begins when the flow of one or more of the feed streams into the reactor is begun, that ends when a flow of a product stream from the reactor begins and during which the reactor is operated under unsteady state flow conditions, the feed streams are fed into the reactor at initial feed stream flow rates that are selected so that the length of the first time period is about equal to the desired residence time for operation of the reactor under steady state flow conditions. If, for example, the desired residence time for operation of the reactor under steady state flow conditions is about 100 minutes, an initial reactor charge occupies about 50% of reactor volume and feed streams are fed to the reactor at an initial combined feed stream flow rate of about 0.6 reactor volumes per hour, then the time period from the beginning of flow of the feed streams into the reactor to the beginning of flow of a product stream from the reactor would be about equal to the desired residence time of 100 minutes.

The reactor start-up procedure reduces the length of the time from reactor start-up to the continuous production of a product stream containing rubber particles having an average particle size above a desired minimum average particle size.

The temperature to which the contents of the reaction mixture are heated in order to bring the reaction mixture to polymerization conditions, that is, the reaction temperature of the process of the present invention, depends in large part on the polymerization initiator used in process, in a manner that is well understood in the art. In a preferred embodiment the reaction mixture is heated to and maintained at a reaction temperature from 38°C to 82°C (100°F to 180°F) preferably from 49°C to 71°C (120°F to 160°F),

In a preferred embodiment, the reactor is operated under atmospheric pressure.

The monoethylenically unsaturated alkyl (meth)acrylate monomer is selected from (C₁-C₁₂)alkyl (meth)acrylate monomers and mixtures thereof, more preferably from (C₁-C₁₂)alkyl acrylate monomers and mixtures thereof. As used herein, the terminology "monoethylenically unsaturated" means having a single site of ethylenic unsaturation per molecule and the terminology "(meth)acrylate monomers" refers collectively to acrylate monomers and methacrylate monomers and the terminology "(Cₓ-C_{y})", as applied to a particular unit, such as, for example, a chemical compound or a chemical substituent group, means having a carbon atom content of from x carbon atoms to y carbon atoms per such unit, for example, "(C₁-C₁₂)alkyl" means a straight or branched alkyl substituent group having from 1 to 12 carbon atoms per group and includes, e.g., methyl, ethyl, n-butyl, sec-butyl, t-butyl, n-propyl, iso-propyl, pentyl, hexyl, heptyl, octyl, nonyl, decyl, undecyl and dodecyl. Suitable (C₁-C₁₂)alkyl (meth)acrylate monomers include (C₁-C₁₂)alkyl acrylate monomers, e.g., ethyl acrylate, butyl acrylate, isopentyl acrylate, n-hexyl acrylate, 2-ethyl hexyl acrylate, and their (C₁-C₁₂)alkyl methacrylate analogs such as, e.g., methyl methacrylate, ethyl methacrylate, propyl methacrylate, iso-propyl methacrylate, butyl methacrylate, hexyl methacrylate, decyl methacrylate.

In a highly preferred embodiment, the alkyl (meth)acrylate monomer used in the process of the present invention is butyl acrylate monomer.

As used herein, the terminology "polyethylenically unsaturated" means having two or more sites of ethylenic unsaturation per molecule. A polyethylenically unsaturated monomer is used in the process of the present invention to provide crosslinking of the poly(alkyl (meth)acrylate) rubber particles formed in the process and to provide "graftlinking" sites in the poly(alkyl (meth)acrylate) rubber for subsequent reaction with grafting monomers. Preferred polyethylenically unsaturated "crosslinking" monomers contain at least two ethylenically unsaturated sites per molecule that have a reactivity that is similar, under the emulsion polymerization conditions used in the process of the present invention, to that of the monoethylenically unsaturated alkyl (meth)acrylate monomer. Preferred graftlinking monomers include those monomers having at least one site of ethylenic unsaturation that have a reactivity that is similar, under the emulsion polymerization conditions used in the process of the present invention, to that of the alkyl (meth)acrylate monomer and at least one other site of ethylenic unsaturation having a reactivity that is substantially different, under the emulsion polymerization conditions used in the process of the present invention, from that of the monoethylenically unsaturated alkyl (meth)acrylate monomer, so that at least one unsaturated site per molecule of graftlinking monomer reacts during synthesis of the rubber latex and at least one other unsaturated site per molecule of graftlinking monomer remains unreacted following synthesis of the rubber latex and thus remains available for subsequent reaction under different reaction conditions. Suitable polyethylenically unsaturated monomers include, for example, butylene diacrylate, divinyl benzene, butene diol dimethacrylate, trimethylolpropane tri(meth)acrylate, allyl methacrylate, diallyl maleate, triallyl cyanurate, triallyl isocyanurate and mixtures thereof.

In a preferred embodiment of the process of the present invention, triallyl cyanurate is used in the process of the present invention as both a crosslinking monomer and a graftlinking monomer.

In a preferred embodiment, the reaction mixture contains from 0.01 to 4 pbw, more preferably from 0.1 to 1.5 pbw, polyethylenically unsaturated monomer per 100 pbw monoethylenically unsaturated alkyl (meth)acrylate monomer.

In a preferred embodiment of the process of the present invention, the monoethylenically unsaturated alkyl (meth)acrylate monomer in the emulsion is selected to provide a poly(alkyl(meth)acrylate) rubber having a glass transition temperature (T_{g}) of less than or equal to 25°C, more preferably less than or equal to 0 °C, and even more preferably less than or equal to -30°C. As referred to herein, the T_{g} of a polymer is the T_{g} value of polymer as measured by differential scanning calorimetry (heating rate 20°C/minute, with the T_{g} value being determined at the inflection point).

Minor amounts, such as, for example, up to 25 pbw per 100 pbw of the total amount monomers, of other unsaturated monomers that are copolymerizable with the alkyl (meth)acrylate monomer used in the process of the present invention may, optionally be included in the reaction mixture, provided that the limitation regarding the T_{g} of the rubber is satisfied. Suitable copolymerizable monomers include, for example, monoethylenically unsaturated carboxylic acids such as, e.g., acrylic acid, methacrylic acid, itaconic acid, glycidyl (meth)acrylate, hydroxy(C₁-C₁₂)alkyl (meth)acrylate monomers such as, e.g., hydroxyethyl methacrylate; (C₄-C₁₂)cycloalkyl (meth)acrylate monomers such as e.g., cyclohexyl methacrylate; (meth)acrylamide monomers such as e.g., acrylamide and methacrylamide; maleimide monomers such as, e.g., N-alkyl maleimides, N-aryl maleimides, maleic anhydride, vinyl esters such as, e.g., vinyl acetate and vinyl propionate. As used herein, the term "(C₄-C₁₂)cycloalkyl" means a cyclic alkyl substituent group having from 4 to 12 carbon atoms per group and the term "(meth)acrylamide" refers collectively to acrylamides and methacrylamides. Also suitable are vinyl aromatic monomers such as for example, styrene and substituted styrenes having one or more alkyl, alkoxyl, hydroxyl or halo substituent group attached to the aromatic ring, including, e.g., α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, e.g., vinyl naphthalene, vinyl anthracene, as well as mixtures of vinyl aromatic monomers, monoethylenically unsaturated nitrile monomers such as for example, acrylonitrile, methacrylonitrile, α- chloro acrylonitrile.

The surfactant used in the process of the present invention is one or more compounds according to formula: (I):

R-SO₃M (I)

wherein:
R is alkyl or alkoxyl, and
M is a hydrogen radical or a cation.

In a preferred embodiment, R is (C₁-C₃₀)alkyl or (C₁-C₃₀)alkoxyl, more preferably (C₆-C₃₀)alkyl or (C₆-C₃₀)alkoxyl.

In a preferred embodiment, M is a metal cation, an ammonium cation, an alkyl ammonium cation or an alkoxyl ammonium cation. Suitable metal cations include, for example, sodium, potassium, lithium and magnesium cations, Suitable alkyl ammonium cations include, for example, diethyl ammonium and tetraethyl ammonium cations. Suitable alkoxyl ammonium cations, include, for example, diethanol ammonium and tetraethanol ammonium cations.

In a highly preferred embodiment, M is a sodium cation, a potassium cation, an ammonium cation, a diethanol ammonium cation or a tetraethanol ammonium cation.

Suitable surfactants include, for example, sodium lauryl sulfate, sodium decyl sulfate, sodium 2-ethylhexyl sulfate, potassium lauryl sulfate, ammonium lauryl sulfate, diethanol ammonium lauryl sulfate, tetraethanol ammonium lauryl sulfate, sodium eicosyl sulfonate and sodium paraffin sulfonate. Preferred are sodium lauryl sulfate, sodium paraffin sulfonate and mixtures thereof.

In a preferred embodiment, the reaction mixture contains from 0.01 to 5 pbw, more preferably from 1 to 4 pbw of the surfactant per 100 pbw of the monoethylenically unsaturated alkyl (meth)acrylate monomer.

In a preferred embodiment, the one or more initiators used in the process of the present invention are selected from a conventional free radical initiators such as, for example, an organic peroxide compound, such as, for example, benzoyl peroxide, a persulfate compound, such as, e.g., potassium persulfate, an azonitrile compound such as, for example, 2,2'-azobis-2,3,3-trimethylbutyronitrile, or a redox initiator system, such as, for example, a combination of a peroxide or hydroperoxide, such as for example, hydrogen peroxide, cumene hydroperoxide or t-butyl hydroperoxide, an oxidizing agent, such as, for example, ferrous sulfate, a chelating agent such as, for example, tetrasodium pyrophosphate, ethylene diamine tetraacetic acid or a salt of ethylene diamine tetraacetic acid, and a reducing agent, such as, for example, sodium formaldehyde sulfoxylate or a reducing sugar. Preferably the initiator comprises a redox initiator system comprising cumene hydroperoxide and sodium formaldehyde sulfoxylate.

In a preferred embodiment, the reaction mixture contains from 0.01 to 2 pbw initiator, more preferably from 0.05 to 1 pbw initiator, per 100 pbw of the monoethylenically unsaturated alkyl (meth)acrylate monomer.

In a highly preferred embodiment, redox initiator system, comprising a combination of cumene hydroperoxide, ferrous sulfate, the monosodium salt of ethylene diamine tetraacetic acid and sodium formaldehyde sulfoxylate is used as the polymerization initiator in the process of the present invention. More preferably, the redox initiator system contains from 0.05 to 0.5 pbw cumene hydroperoxide per 100 pbw of the monoethylenically unsaturated alkyl (meth)acrylate monomer, an amount of sodium formaldehyde sulfoxylate effective to provided a sodium formaldehyde sulfoxylate:cumene hydroperoxide molar ratio of 0.9:1 to 1:1.1, from 0.1 to 10 pbw of the monosodium salt of ethylene diamine tetraacetic acid per 100 pbw cumene hydroperoxide and from 0.1 to 10 pbw ferrous sulfate per 100 pbw cumene hydroperoxide.

Optionally, the reaction mixture may contain from 0.01 to 1.0 pbw of an electrolyte per 100 pbw alkyl (meth)acrylate monomer. Suitable electrolytes include, for example, tetrasodium pyrophosphate and sodium sulfate.

### Graft Copolymer

In a second aspect of the present invention, monomers are polymerized in the presence of poly(alkyl (meth)acrylate)rubber particles made by the process of the present invention to thereby form a graft copolymer having a dispersed poly(alkyl (meth)acrylate) rubber phase and a rigid thermoplastic phase, at least a portion of which is chemically grafted to the poly(alkyl (meth)acrylate) rubber phase.

In a preferred embodiment, the rigid thermoplastic resin phase comprises thermoplastic polymer or copolymer that exhibits a T_{g} of greater than 25°C, preferably greater than or equal to 90°C and even more preferably greater than or equal to 100°C.

In a preferred embodiment, the rigid thermoplastic phase comprises a polymer having repeating units derived from one or more monomers selected from the group consisting of (C₁-C₁₂)alkyl (meth)acrylate monomers, vinyl aromatic monomers and monoethylenically unsaturated nitrite monomers. Suitable (C₁-C₁₂)alkyl (meth)acrylate monomers, vinyl aromatic monomers and monoethylenically unsaturated nitrile monomers are those set forth above in the description of the rubber phase.

In a highly preferred embodiment, the rigid thermoplastic phase comprises one or more vinyl aromatic polymers. Suitable vinyl aromatic polymers comprise at least 50 wt% repeating units derived from one or more vinyl aromatic monomers.

In a preferred embodiment, the rigid thermoplastic resin phase comprises a vinyl aromatic polymer having first repeating units derived from one or more vinyl aromatic monomers and having second repeating units derived from one or more monoethylenically unsaturated nitrile monomers.

Preferably the rigid thermoplastic phase comprises a styrene-acrylonitrile copolymer, an α-methystyrene-acrylonrtrile copolymer or a mixture thereof.

The rigid thermoplastic phase is made according to known processes, e.g., mass polymerization, emulsion polymerization, suspension polymerization or combinations thereof, wherein a at least a portion of the rigid thermoplastic phase is chemically bonded, i.e., "grafted" to the rubber phase via reaction with unsaturated sites present in the rubber phase. The unsaturated sites in the rubber phase are provided, e.g., by residual unsaturated sites in those repeating units of the rubber that were derived from a graftlinking monomer.

The rigid thermoplastic phase of the graft copolymer may be formed solely by polymerization carried out in the presence of the rubber phase or by addition of one or more separately polymerized rigid thermoplastic polymers to a rigid thermoplastic polymer that has been polymerized in the presence of the rubber phase.

In a preferred embodiment, the rigid thermoplastic phase is made by an aqueous emulsion or aqueous suspension polymerization reaction in the presence of rubber phase and a polymerization initiator system, e.g., a thermal or redox initiator system.

The amount of grafting that takes place between the rigid thermoplastic phase and the rubber phase varies with the relative amount and composition of the rubber phase. In a preferred embodiment, from 10 to 90 wt%, preferably from 25 to 60 wt%, of the rigid thermoplastic phase is chemically grafted to the rubber phase and from 10 to 90 wt%, preferably from 40 to 75 wt% of the rigid thermoplastic phase remains "free", that is, non-grafted.

### Molding Composition

In a third aspect, the present invention is directed to a molding composition containing a thermoplastic resin and an amount of the poly(alkyl (meth)acrylate rubber-based graft copolymer of the present invention that is effective to improve the impact resistance of the molding composition. Typically, an amount of the poly(alkyl (meth)acrylate rubber-based graft copolymer that provides a poly(alkyl (meth)acrylate rubber content of from 5 to 35 pbw poly(alkyl (meth)acrylate rubber per 100 pbw of the molding composition is effective to improve the impact properties of the molding composition. In a preferred embodiment, the thermoplastic resin is selected from vinyl halide resins, (meth)acrylate resins, vinyl aromatic resins, polycarbonate resins, polyester carbonate resins, polyester resins, polyphenylene oxide resins or a mixture thereof.

### Vinyl Halide Resins

Vinyl halide resins suitable for use as the thermoplastic resin in molding composition of the present invention are known compounds whose preparation and properties are also known. Suitable vinyl halide resins include one or more homopolymers of vinyl halide monomers, such as, for example, vinyl chloride, vinylidene chloride or vinylidene fluoride, as well as copolymers of vinyl halide monomers with other copolymerizable monomers, such as, for example, any of the ethylenically unsaturated monomers disclosed above. Poly(vinyl chloride) is preferred as the vinyl halide resin.

### (Meth)acrylate Resins

(Meth)acrylate resins suitable for use as the thermoplastic resin of the molding composition of the present invention are known compounds whose preparation and properties are also known. Suitable (meth)acrylate resins include one or more polymers having structural units derived from one or more (C₁-C₁₂)alkyl (meth)acrylate monomers, optionally including up to 50 wt% structural units derived from other copolymerizable monoethylenically unsaturated comonomers. Suitable (C₁-C₁₂)alkyl (meth)acrylate monomer and comonomers are disclosed above. Methyl methacrylate homopolymers, copolymers having greater than 50 wt% structural units derived from methyl methacrylate monomer and mixtures thereof are preferred as the (meth)acrylate resin.

### Vinyl Aromatic resins

Vinyl aromatic resins suitable for use as the thermoplastic resin of the molding composition of the present invention are known compounds whose preparation and properties are also known. Suitable vinyl aromatic resins include one or more resins having structural units derived from one or more vinyl aromatic monomers. Suitable vinyl aromatic monomers are disclosed above and include, for example, styrene and alkyl-substituted styrenes such as α-methyl styrene.

In a preferred embodiment, the vinyl aromatic resin is a copolymer that includes first structural units derived from a vinyl aromatic monomer and second structural units derived from a comonomer, preferably a monoethylenically unsaturated nitrile monomer. Suitable monoethylenically unsaturated nitrile monomers are disclosed above and include, for example, acrylonitrile.

In a highly preferred embodiment, the vinyl aromatic resin is selected from polystyrene, styrene-acrylonitrile copolymers, α-methyl styrene-acrylonitrile copolymers and mixtures thereof.

### Aromatic Polycarbonate Resin

Aromatic polycarbonate resins suitable for use as the thermoplastic resin of the molding composition of the present invention are known compounds whose preparation and properties have been described, see, generally, U.S. Patent Nos. 3,169,121, 4,487,896 and 5,411,999.

In a preferred embodiment, the aromatic polycarbonate resin component of the present invention is the reaction product of a dihydric phenol according to the structural formula (II):

HO-A-OH (II)

wherein A is a divalent aromatic radical,
with a carbonate precursor and contains structural units according to the formula (III): 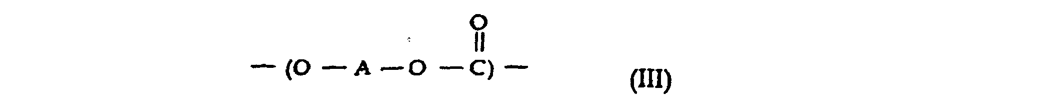 wherein A is defined as above.

As used herein, the term "divalent aromatic radical "includes those divalent radicals containing a single aromatic ring such as phenylene, those divalent radicals containing a condensed aromatic ring system such as, for example, naphthlene, those divalent radicals containing two or more aromatic rings joined by a non-aromatic linkages, such as for example, an alkylene, alkylidene or sulfonyl group, any of which may be substituted at one or more sites on the aromatic ring with, for example, a halo group or (C₁-C₆)alkyl group.

In a preferred embodiment, A is a divalent aromatic radical according to the formula (IV):

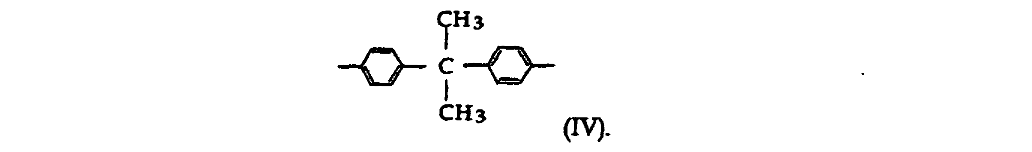

Suitable dihydric phenols include, for example, one or more of 2,2-bis-(4-hydroxyphenyl) propane ("bisphenol A"), 2,2-bis(3,5-dimethyl-4-hydroxyphenyl)propane, bis(4-hydroxyphenyl) methane, 4,4-bis(4-hydroxyphenyl)heptane, 3,5,3',5'-tetrachloro-4,4'-dihydroxyphenyl)propane, 2,6-dihydroxy naphthalene, hydroquinone, 2,4'-dihydroxyphenyl sulfone. In a highly preferred embodiment, the dihydric phenol is bisphenol A.

The carbonate precursor is one or more of a carbonyl halide, a carbonate ester or a haloformate. Suitable carbonyl halides include, for example, carbonyl bromide and carbonyl chloride. Suitable carbonate esters include, such as for example, diphenyl carbonate, dichlorophenyl carbonate, dinaphthyl carbonate, phenyl tolyl carbonate and ditolyl carbonate. Suitable haloformates include for example, bishaloformates of a dihydric phenols, such as, for example, hydroquinone, or glycols, such as, for example, ethylene glycol, neopentyl glycol. In a highly preferred embodiment, the carbonate precursor is carbonyl chloride.

Suitable aromatic polycarbonate resins include one or more linear aromatic polycarbonate resins, branched aromatic polycarbonate resins. Suitable linear aromatic polycarbonates resins include, e.g., bisphenol A polycarbonate resin. Suitable branched polycarbonates are known and are made by reacting a polyfunctional aromatic compound with a dihydric phenol and a carbonate precursor to form a branched polymer, see generally, U. S. Patent Nos. 3,544,514, 3,635,895 and 4,001,184. The polyfunctional compounds are generally aromatic and contain at least three functional groups which are carboxyl, carboxylic anhydrides, phenols, haloformates or mixtures thereof, such as, for example, 1,1,1-tri(4-hydroxyphenyl)ethane, 1,3,5,-trihydroxy-benzene, trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic dianhydride. The preferred polyfunctional aromatic compounds are 1,1,1-tri(4-hydroxyphenyl)ethane, trimellitic anhydride or trimellitic acid or their haloformate derivatives.

In a preferred embodiment, the polycarbonate resin component of the present invention is a linear polycarbonate resin derived from bisphenol A and phosgene.

In a preferred embodiment, the weight average molecular weight of the polycarbonate resin is from 10,000 to more than 200,000 grams per mole ("g/mole"), as determined by gel permeation chromatography relative to polystyrene. Such resin typically exhibit an intrinsic viscosity of 0.3 to 1.5 deciliters per gram in methylene chloride at 25°C.

Polycarbonate resins are made by known methods, such as, for example, interfacial polymerization, transesterification, solution polymerization or melt polymerization.

In a preferred embodiment, the molding composition comprises a polycarbonate resin and a graft copolymer based on a poly(alkyl (meth)acrylate rubber made by the process of the present invention using sodium lauryl sulfate as the surfactant.

### Copolyester-carbonate Resin

Copolyester-carbonate resins suitable for use as the thermoplastic resin of the molding composition of the present invention are known compounds whose preparation and properties have been described, see, generally, US. Patent Nos. 3,169,121,4,430,484 and 4,487,896.

Copolyestercarbonate resins comprise linear or randomly branched polymers that contain recurring carbonate groups, carboxylate groups and aromatic carbocyclic groups in the polymer chain, in which at least some of the carbonate groups are bonded directly to the ring carbon atoms of the aromatic carbocyclic groups.

In a preferred embodiment, the copolyester-carbonate resin component of the present invention is derived from a carbonate precursor, at least one dihydric phenol and at least one dicarboxylic acid or dicarboxylic acid equivalent. In a preferred embodiment, the dicarboxylic acids is one according to the formula (V): 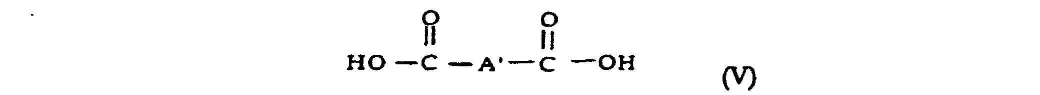 wherein A' is alkylene, alkylidene, cycloaliphatic or aromatic and is preferably a non-substituted phenylene radical or a substituted phenylene radical that is substituted at one or more sites on the aromatic ring, wherein each of such substituent groups is independently (C₁-C₆) alkyl, and the copolyester carbonate resin comprises first structural units according to formula (III) above and second structural units according to formula (VI): 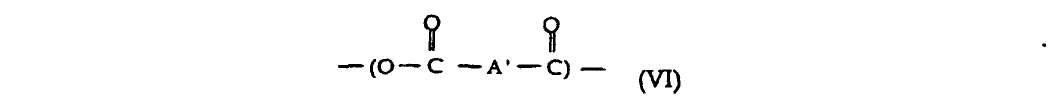 wherein A' is defined as above.

Suitable carbonate precursors and dihydric phenols are those disclosed above.

Suitable dicarboxylic acids, include, for example, phthalic acid, isophthalic acid, terephthalic acid, dimethyl terephthalic acid, oxalic acid, malonic acid, succinic acid, glutaric acid, adipic acid, pimelic acid, suberic acid, azelaic acid, sebacic acid, dimethyl malonic acid, 1,12-dodecanoic acid *cis*-1,4-cyclohexane dicarboxylic acid, *trans*-1,4-cyclohexane dicarboxylic acid, 4,4'- bisbenzoic acid, naphthalene-2,6-dicarboxylic acid. Suitable dicarboxylic acid equivalents include, for example, anhydride, ester or halide derivatives of the above disclosed dicarboxylic acids, such as, for example, phthalic anhydride, dimethyl terephthalate, succinyl chloride.

In a preferred embodiment, the dicarboxylic acid is an aromatic dicarboxylic acid, more preferably one or more of terephthalic acid and isophthalic acid.

In a preferred embodiment, the ratio of ester bonds to carbonate bonds present in the copolyester carbonate resin is from 0.25 to 0.9 ester bonds per carbonate bond.

In a preferred embodiment, the copolyester-carbonate copolymer has a weight average molecular weight of from 10,000 to 200,000 g/mole.

Copolyester-carbonate resins are made by known methods, such as, for example, interfacial polymerization, transesterification, solution polymerization or melt polymerization.

### Polyester Resins

Polyester resins suitable for use as the thermoplastic resin of the molding composition of the present invention are known compounds whose preparation and properties have been described, see for example, Kirk-Othmer Encyclopedia of Chemical Technology, Fourth Edition,Vol. 19 at pp. 609-653, John Wiley & Sons (1996). Suitable polyester resins are typically obtained through the condensation or ester interchange polymerization of a diol or diol equivalent with a diacid or diacid equivalent and each comprise recurring structural units according to formula (VII): 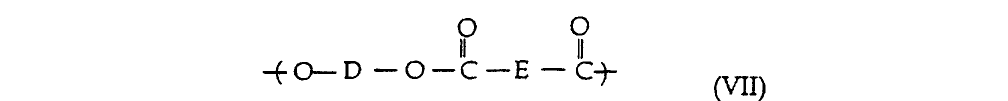 wherein:
D represents the residue of the diol or diol equivalent ("diol residue"),
E represents the residue of the diacid or diacid equivalent (diacid residue"), and each R₁ and R₂ is independently a divalent acyclic hydrocarbon radical, a divalent alicyclic hydrocarbon radical or a divalent aromatic hydrocarbon radical.

As used herein, the terminology "acyclic hydrocarbon radical" means a straight chain or branched saturated hydrocarbon radical, preferably containing from 2 to 12 carbon atoms per radical, such as, for example, dimethylene, trimethylene, tetramethylene, hexamethylene and octamethylene.

As used herein, the terminology "alicyclic hydrocarbon radical" means a hydrocarbon radical containing one or more saturated hydrocarbon rings, preferably containing from 4 to 10 carbon atoms per ring, per radical which may optionally be substituted on one or more of the rings with one or more alkyl or alkylene groups, each preferably containing from 2 to 6 carbon atoms per group and which, in the case of two or more rings, may be fused rings, such as, for example, 2,2,4,4-tetramethyl-1,3-cyclobutylene, 1,4-cyclohexylene, cyclohexylene-1,4-dimethylene, 1,4-cyclooctylene.

As used herein, the term "aromatic hydrocarbon radical" means a hydrocarbon radical containing one or more aromatic rings per radical, which may optionally be substituted on the one or more aromatic rings with one or more alkyl or alkylene groups, each preferably containing from 2 to 6 carbon atoms per group and which, in the case of two or more rings, may be fused rings, such as, for example, 1,2-phenylene, 1,3-phenylene, 1,4-phenylene, 2,6-naphthalene, 2,7-phenathrylene.

Suitable diols include acyclic diols such as, for example, ethylene glycol, 1,3-propylene glycol, 1,4-butane glycol, 1,5-pentane diol, 1,6-hexane diol, 1,7-heptane diol, 1,8-octane diol, 1,9-nonane diol, 1,10-decane diol, 1,12-dodecane diol; alicyclic diols such as, for example, 2,2,4,4-tetramethyl-1,3-cyclobutane diol, 3,4-cyclopentanediol, 1,4-cyclohexanedimethanol, including *cis*-1,4-cyclohexanedimethanol and *trans*-1,4-cyclohexanedimethanol; and aromatic diols such as, for example, bisphenol A and hydroquinone. Suitable diol equivalents include corresponding esters and ethers, such as for example, dialkyl esters and diaryl esters.

Suitable diacids include, for example, dicarboxylic acids, such as, for example, phthalic acid, isophthalic acid, terephthalic acid, dimethyl terephthalic acid, oxalic acid, malonic acid, succinic acid, glutaric acid, adipic acid, pimelic acid, suberic acid, azelaic acid, sebacic acid, dimethyl malonic acid, 1,12-dodecanoic acid *cis*-1,4-cyclohexane dicarboxylic acid, *trans*-1,4-cyclohexane dicarboxylic acid, 4,4'- bisbenzoic acid, naphthalene-2,6-dicarboxylic acid. Suitable diacid equivalents include, for example, corresponding anhydride, ester or halide derivatives, such as, for example, phthalic anhydride, dimethyl terephthalate, succinyl chloride.

In a preferred embodiment, the first and second polyester resins each have a number average molecular weight of from 10,000 to 100,000 g/mole, more preferably 15,000 to 50,000 g/mole, as measured by gel permeation chromatography using a polystyrene standard.

### Polyphenylene Ether Resins

The polyphenylene ethers resins suitable as the thermoplastic resin of the molding composition of the present invention are known polymers whose preparation and properties are also known. Suitable polyphenylene ethers are those polymers comprising a plurality of structural units of the formula (VIII) 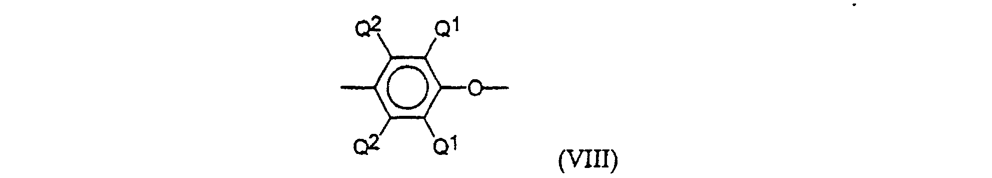 wherein, in each structural unit independently:
each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and
each Q² is independently hydrogen, halogen, primary or secondary lower alkyl, phenyl, haloalkyl, hydrocarbonoxy or halohydrocarbonoxy as defined for Q¹.

In a preferred embodiment, each Q¹ is alkyl or phenyl, more preferably, (C₁-C₄)alkyl, and each Q² is hydrogen.

Both homopolymer and copolymer polyphenylene ether resins are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are polyphenylene ether resins containing moieties prepared by grafting vinyl monomers or polymers such as polystyrenes and elastomers, as well as coupled polyphenylene ether resins in which coupling agents such as low molecular weight polycarbonates, quinones, heterocycles and formulas undergo reaction in known manner with the hydroxy groups of two polyphenylene ether resin chains to produce a higher molecular weight polymer, provided a substantial proportion of free OH groups remains.

The polyphenylene ether resins are typically prepared by the oxidative coupling of at least one mono hydroxy aromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

The molding composition of the present invention may, optionally, also contain one or more conventional additives, such as:
(1) antioxidants, such as, e.g., organophosphites, e.g., tris(nonyl-phenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, e.g., butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, e.g., distearylthiopropionate, dilaurylthiopropionate, ditridecylthiodipropionate, amides of beta-(3,5-di-tert-butyl-4-hydroxyphenol)-propionic acid;
(2) UV absorbers and light stabilizers such as, e.g., (i) 2-(2'-hydroxyphenyl)-benzotriazoles, 2-Hydroxy-benzophenones; (ii) esters of substituted and unsubstituted benzoic acids, (iii) acrylates, (iv) nickel compounds;
(3) metal deactivators, such as, e.g., N,N'-diphenyloxalic acid diamide, 3-salicyloylamino-1,2,4-triazole;
(4) peroxide scavengers, such as, e.g., (C₁₀-C₂₀)alkyl esters of β-thiodipropionic acid, mercapto benzimidazole;
(5) polyamide stabilizers;
(6) basic co-stabilizers, such as, e.g., melamine, polyvinylpyrrolidone, triallyl cyanurate; urea derivatives, hydrazine derivatives; amines, polyamides, polyurethanes;
(7) sterically hindered amines such as, e.g., triisopropanol amine or the reaction product of 2,4-dichloro-6-(4-morpholinyl)-1,3, 5-triazine with a polymer of 1,6-diamine, N, N'-Bis(-2, 2,4,6-tetramethyl-4-piperidenyl) hexane;
(8) neutralizers such as magnesium stearate, magnesium oxide, zinc oxide, zinc stearate, hydrotalcite;
(9) fillers and reinforcing agents, such as, e.g., silicates, TiO_{2,} glass fibers, carbon black, graphite, calcium carbonate, talc, mica;
(10) other additives such as, e.g., lubricants such as, e.g., pentaerythritol tetrastearate, EBS wax, silicone fluids, plasticizers, optical brighteners, pigments, dyes, colorants, flameproofing agents; anti-static agents; blowing agents.

The molding composition of the present invention is made, for example, by melt blending the above described components using, for example, a two-roll mill, a Banbury mixer, a single screw extruder or twin-screw extruder.

The molding composition of the present invention can be formed into useful articles by a variety of known processes such as, for example, injection, extrusion, rotation, and blow molding and thermoforming.

The molding composition of the present invention is particularly well suited for applications requiring weatherability and impact resistance in articles such as, e.g., automotive exterior parts, outdoor furniture, and construction materials, such as, for example, vinyl siding.

### Examples 1-4 and Comparative Example C1-C2

### Example 1

Example 1 illustrates making an aqueous poly(alkyl (meth)acrylate) rubber latex by the process of the present invention.

A 3.78C (one gallon) continuous reactor equipped with an agitator was charged with 1082 grams ("g") of demineralized water, 245.3 g of a surfactant solution containing 2.0 pbw sodium lauryl sulfate, 0.15 pbw tetrasodium pyrophosphate and 135 pbw water ("Surfactant Solution 1"), 159.2 g of buyl acrylate, 19.7 g of a solution of 0.25 pbw of triallyl cyanurate in 10.5 pbw butyl acrylate ("TAC Solution 1") and 27 g of an activator solution containing 0.09 pbw sodium formaldehyde sulfoxylate, 0.012 the monosodium salt of tetraacetic acid (NaHEDTA), 0.006 pbw FeSO₄·7H₂O and 15 pbw water ("Activator Solution 1"). The reactor contents were purged with N₂ while the reactor contents were heated to 60°C (140°F) with continued agitation.

In order to initiate polymerization, 0.395 g of cumene hydroperoxide was introduced into the heated, stirred contents of the reactor, which resulted in an exotherm within about two to ten minutes following the introduction.

Twenty minutes after the exotherm, feed streams were introduced to the reactor. Feed streams of butyl acrylate (at a rate of 478 grams per hour ("g/hr")), cumene hydroperoxide (at a rate of 1.15 g/hr) and TAC Solution 1 (at a rate of 57.7 g/hr) were fed to a first mixpot, the overflow from the first mixpot and feed streams of Surfactant Solution 1 (at a rate of 736 g/hr) and Activator Solution 1 (at a rate of 81.1 g/hr) were each fed to a second mixpot and the overflow from the second mixpot was fed to the reactor.

A product stream began to flow from the reactor approximately 33 minutes after flow of the feed streams into the reactor was begun. The feed streams were then continuously fed to the reactor through the two mixpots, while the reactor was maintained under polymerization conditions and a product stream containing poly(butylacrylate) rubber particles continuously flowed from the reactor.

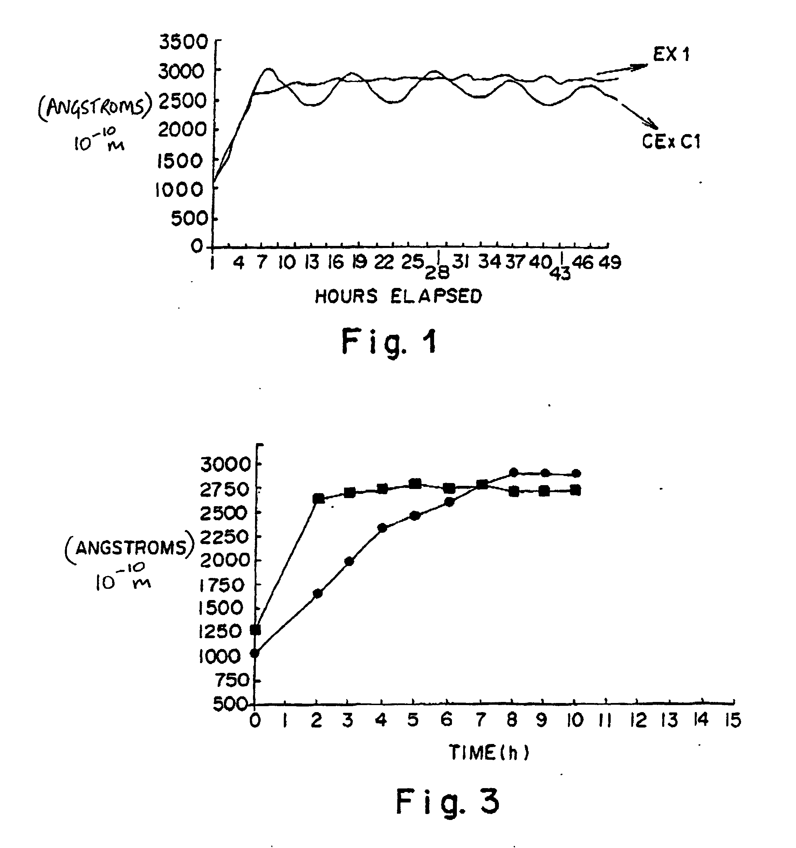

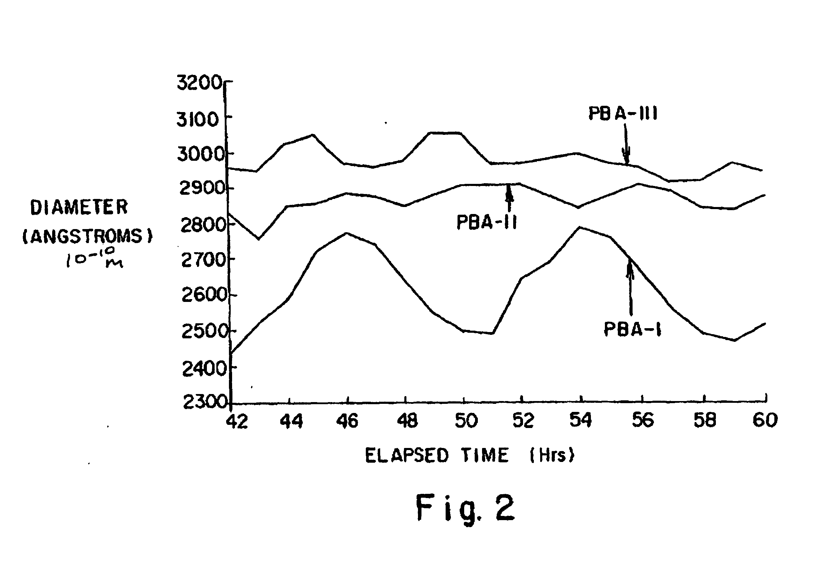

The mean particle size of poly(butyl acrylate) rubber particles in the effluent product stream was monitored using a Spectronic® 20 spectrophotometer and is plotted in Figures 1 and 2 versus the time elapsed from the beginning of flow of the effluent product stream.

### Example 2

The process of Example 2, was analogous to that of Example 1, except that the amount of triallyl cyanurate in the triallyl cyanurate solution was adjusted from 0.25 to 0.75 pbw triallyl cyanurate per 100 pbw butyl acrylate.

### Example 3

The process of Example 3 was analogous to that of Example 1, except that a surfactant solution containing 2.0 pbw sodium paraffin sulfonate, 0.15 pbw tetrasodium pyrphosphate and 135 pbw water was substituted for Surfactant Solution 1.

The mean particle size of poly(butyl acrylate) rubber particles in the effluent product stream produced by the process of Example 3 was monitored using a Spectronic® 20 spectrophotometer and is plotted in Figure 2 versus the time elapsed from the beginning of the flow of the effluent product stream.

### Example 4

The process of Example 4 was analogous to that of Example 3, except that the amount of triallyl cyanurate in the triallyl cyanurate solution was adjusted from 0.25 to 0.75 pbw triallyl cyanurate per 100 pbw butyl acrylate.

### Comparative Example C1

The process of Comparative Example C1 was analogous to that of Example 1, except that a surfactant solution containing 3.1 pbw sodium dodecyl benzene sulfonate, 0.15 pbw tetrasodium pyrphosphate and 135 pbw water was substituted for Surfactant Solution 1.

The mean particle size of poly(butyl acrylate) rubber particles in the effluent product stream produced by the process of Comparative Example C1 was monitored using a Spectronic® 20 spectrophotometer and is plotted Figures 1 and 2 versus the time elapsed from the beginning of the flow of the effluent product stream.

### Comparative Example C2

The process of Comparative Example C2 was analogous to that of Comparative Example C1, except that the amount of triallyl cyanurate in the triallyl cyanurate solution was adjusted from 0.25 to 0.75 pbw triallyl cyanurate per 100 pbw butyl acrylate.

Referring now to Figures 1 and 2, the mean particle size of the poly(butadiene) latex of Example 1 oscillates between an upper mean particle size of about 2900 x 10⁻¹⁰ m (Ångstroms)("Å") and a lower mean particle size of about 2750 x 10⁻¹⁰ m (Å) and the mean particle size of the poly(butadiene) latex of Example 3 oscillates between an upper mean particle size of about 3050 x10⁻¹⁰ m (Å) and a lower mean particle size of about 2900 x 10⁻¹⁰ m (Å), while the mean particle size of the poly(butadiene) latex of Comparative Example C1 oscillates over a comparatively wide range, that is, between an upper mean particle size of about 2800 x10⁻¹⁰ m (Å) and a lower mean particle size of about 2450 x10⁻¹⁰ m (Å)

### Examples 5-8 and Comparative Example C3 and C4

### Example 5

The graft copolymer of Example 5 was made by the aqueous emulsion polymerization of styrene and acrylonitrile monomers in the presence of the poly(butyl acrylate) rubber particles having a mean particle size of 2810 x 10⁻¹⁰m (Å) that had been collected between 10 hours and 25 hours of continuous polymerization made by the process of Example 1.

A reactor was charged with 175 pbw water, 0.73 pbw sodium lauryl sulfonate and 62.1 pbw poly(butyl acrylate) rubber particles (in the form of an aqueous poly(butyl acrylate) rubber latex containing about 39 wt% solids) and The contents of the reactor were heated to 140°C and 26.67 pbw styrene monomer, 13.3 pbw acrylonitrile monomer, 0.2 pbw cumene hydroperoxide and an activator solution containing 0.0024 pbw FESO₄·7H₂O, 0.012 pbw of the disodium salt of ethylene diamine tetraacetic acid (Na₂EDTA), 0.22 pbw sodium formaldehyde sulfoxylate and 5 pbw water were each fed into the reactor at substantially uniform respective rates over a time period of 110 minutes. The reactor contents were continuously agitated and were maintained at 140°C during the introduction of the reactants and for 1 hour following addition of the reactants. The reactor contents were then coagulated by the addition of 3 pbw CaCl₂ per 100 pbw graft copolymer particles (dry basis) at a temperature of from 195 to 205°C and then dried in a fluid bed dryer at 165°C.

The composition of the graft copolymer of Example 5 was analyzed by Fourier Transfer Infrared Spectroscopy (FTIR) and found to be 58.5 pbw butyl acrylate, 28.3 pbw styrene and 13.2 pbw acrylonitrile, based on 100 pbw of the graft copolymer.

### Example 6

The graft copolymer of Example 6 was made by the same process disclosed above in Example 5, except that poly(butyl acrylate) rubber particles having a mean particle size of 2875 x 10⁻¹⁰ m (Å) that had been collected between 50 hours and 65 hours of continuous polymerization by the process of Example 2 were used as the substrate in the graft polymerization reaction.

The composition of the graft copolymer of Example 6 was analyzed by FTIR and found to be 60.2 pbw butyl acrylate, 25.8 pbw styrene and 14 pbw acrylonitrile, based on 100 pbw of the graft copolymer.

### Example 7

The graft copolymer of Example 7 was made by the same process disclosed above in Example 5, except that poly(butyl acrylate) rubber particles having a mean particle size of 3110 x 10⁻¹⁰ m (Å) that had been collected between 11 hours and 25 hours of continuous polymerization by the process of Example 3 were used as the substrate in the graft polymerization reaction.

The composition of the graft copolymer of Example 7 was analyzed by FTIR and found to be 59.4 pbw butyl acrylate, 27.5 pbw styrene and 13.1 pbw acrylonitrile, based on 100 pbw of the graft copolymer.

### Example 8

The graft copolymer of Example 8 was made by the same process disclosed above in Example 5, except that poly(butyl acrylate) rubber particles having a mean particle size of 2920 x10⁻¹⁰ m (Å) that had been collected between 50 hours and 65 hours of continuous polymerization by the process of Example 4 were used as the substrate in the graft polymerization reaction.

The composition of the graft copolymer of Example 8 was analyzed by FTIR and found to be 60.3 pbw butyl acrylate, 25.8 pbw styrene and 13.9 pbw acrylonitrile, based on 100 pbw of the graft copolymer.

### Comparative Example C3

The graft copolymer of Comparative Example C3 was made by the same process disclosed above in Example 5, except that poly(butyl acrylate) rubber particles having a mean particle size of 2610 x 10⁻¹⁰m (Å) that had been collected between 10 hours and 25 hours of continuous polymerization by the process of Comparative Example C1 were used as the substrate in the graft polymerization reaction.

The composition of the graft copolymer of Comparative Example 3 was analyzed by FTIR and found to be 59.6 pbw butyl acrylate, 27.8 pbw styrene and 12.5 pbw acrylonitrile, based on 100 pbw of the graft copolymer.

### Comparative Example C4

The graft copolymer of Comparative Example C4 was made by the same process disclosed above in Comparative Example C3, except that poly(butyl acrylate) rubber particles having a mean particle size of 2700 x10⁻¹⁰ m (Å) that had been collected between 50 hours and 65 hours of continuous polymerization by the process of Comparative Example C2 were used as the substrate in the graft polymerization reaction.

The composition of the graft copolymer of Comparative Example C4 was analyzed by FTIR and found to be 60 pbw butyl acrylate, 26.4 pbw styrene and 13.6 pbw acrylonitrile, based on 100 pbw of the graft copolymer.

### Examples 9-10 and Comparative Example C5

The graft copolymers of Examples 5 and 7 and Comparative Example C3 were used as impact modifiers in the molding compositions of Examples 9-10 and Comparative Example C5 by combining the graft copolymers with the following components:
- SAN-1: Styrene-acrylonitrile resin (75 pbw styrene/25 pbw acrylonitrile, based on 100 pbw copolymer and having a molecular weight of 80,000 g/mole),
- TiO₂: Titanium dioxide, and
- ADDITIVES: 47 pbw Tinuvin® 328 UV stabilizer and 22 pbw Tinuvin® 770 UV stabilizer, each from Ciba Specialty Chemicals Corporation and 19 pbw Anox® PP-18 antioxidant and 12 pbw Alkanox® 240 antioxidant, each from Enichem Co., based on 100 pbw ADDITIVES,
in the relative amounts, based on 100 pbw of the molding composition, set forth below in TABLE I.

Each of the molding compositions of Examples 9-10 and Comparative Example C5 was compounded using a twin screw extruder at a stock temperature of 232°C (450°F) Pellets of the compositions of Examples 9-10 and Comparative Example C5 were molded at a stock temperature of 232°C (450°F) and a mold temperature of 66°C (150°F) to make specimens for testing.

The notched Izod impact performance of each of the compositions was tested according to ASTM D256. The falling dart impact properties were measured using an instrumented impact apparatus (Dynatup) with a 1.27cm (½ inch) diameter dart. The melt flow index of each of the compositions was measured using a 5 kilogram weight at 260°C. Gloss properties at 20° were measured according to ASTM D523. Specimens molded from each of the compositions were also subjected to Xenon arc accelerated weathering using inner and outer borosilicate (Type "S") filters and 340 nm light at an intensity of 0.77 Watts per square meter ("W/m^{2"}). The black panel temperature was maintained at 70°C and dry bulb temperature was maintained at 45°C. Color shift was measured on the L, a and b scale for color measurement and reported as a "delta b" value, with a higher value of delta b indicating a more pronounced color shift, with a difference of 0.5 delta b unit or greater being considered as a significant color shift.

Results of the testing are set forth below for Examples 9 and 10 and Comparative Example C5, in TABLE I as Notched Izod Impact, expressed in J/m (foot pound force per inch ("ft-lb/in")), Dart Impact, expressed in J (foot pounds force ("ft-lb")), Melt Flow Index, expressed in grams per 10 minutes ("g/10 min") and Gloss at 20° and in TABLE II as Delta b versus cumulative exposure, expressed in kilojoules per square meter ("kJ/m²").

**TABLE I**

| | **Ex 9** | **Ex 10** | **C Ex C5** |
|---|---|---|---|
| SAN-1 | 55 | 55 | 55 |
| Ex 5 | 45 | -- | -- |
| Ex 7 | -- | 45 | -- |
| C Ex C3 | -- | -- | 45 |
| TiO₂ | 12 | 12 | 12 |
| ADDITIVES | 1.6 | 1.6 | 1.6 |

| **Properties** | | | |
|---|---|---|---|
| Notched Izod Impact (ft-lb/in) J/m | (3.4) 181.2 | (2.9) 154.6 | (2.5) 133.3 |
| Dart Impact (ft-lb) J | (13.8) 18.7 | (11.7) 15.9 | (9.9) 13.4 |
| MFI (g/10 min) | 18.4 | 18.9 | 20.7 |
| Gloss, 20° | 89 | 94 | 90 |

**TABLE II**

| **Cumulative Exposure (kJ/m**^{**2**}**)** | **Ex 9, Delta b** | **Ex 10, Delta b** | **C Ex C5, Delta b** |
|---|---|---|---|
| 0 | 0 | 0 | 0 |
| 56.8 | -1.5 | -1.2 | -1.5 |
| 113.7 | -1.7 | -1.4 | -1.7 |
| 231.6 | -1.7 | -1.4 | -1.7 |
| 641 | -1.7 | -1.5 | -1.4 |
| 1012 | -1.3 | -1.0 | -0.8 |
| 1176 | -1.1 | -.07 | -0.4 |
| 1338 | -0.6 | -0.3 | 0.3 |
| 1392 | -0.4 | -0.1 | 0.5 |
| 1454 | 0.4 | 0.3 | 1.2 |
| 1697 | 1.0 | 0.5 | 1.5 |
| 1909 | 1.3 | 0.9 | 1.7 |
| 2142 | 1.6 | 1.2 | 2.1 |
| 2382 | 1.5 | 1.2 | 2.1 |
| 2529 | 1.5 | 1.2 | 2.0 |
| 2743 | 1.7 | 1.4 | 2.3 |
| 2894 | 1.7 | 1.4 | 2.3 |
| 3128 | 1.6 | 1.2 | 2.1 |
| 3289 | 1.8 | 1.3 | 2.3 |
| 3607 | 1.6 | 1.1 | 2.1 |
| 3826 | 1.6 | 1.2 | 2.2 |
| 4042 | 1.7 | 1.2 | 2.4 |

The results of the accelerated weathering testing set forth in TABLE II show that the compositions of Examples 9 and 10 exhibited color retention compared to the composition of Comparative Example C5.

### Examples 11 and 12 and Comparative Example C6

The graft copolymers of Examples 6, 8 and Comparative Example C4 were used as impact modifiers in the molding compositions of Examples 11 and 12 and Comparative Example C6 by combining the graft copolymers with the following components:
- SAN-1: Styrene-acrylonitrile resin (75 pbw styrene/25 pbw acrylonitrile, based on 300 pbw copolymer and having a molecular weight of 80,000 g/mole),
- PC-1: Polycarbonate resin derived from bisphenol A and phosgene and having a molecular weight of 140,000 g/mole,
- PMMA-1: Poly(methyl methacrylate) resin (Metablend P552 resin, Elf Atochem),
- PMMA-2: Poly(methyl methacrylate) resin (Plexiglas® V920 resin, Atohaas Co.), and
- ANTIOXIDANTS: 33.3 pbw Anox® PP-18 antioxidant and 66,7 pbw Alkanox® 240 antioxidant, each from Enichem Co., based on 100 pbw ANTIOXIDANT,
in the relative amounts, based on 100 pbw of the molding composition, set forth below in TABLE III.

Each of the molding compositions of Examples 11-12 and Comparative Example C6 was compounded using a twin screw extruder at a die temperature of 288°C (550°F). Pellets of the compositions of Examples 11-12 and Comparative Example C4 were molded at a stock temperature of 260°C (500°F) and a mold temperature of 66°C (150°F) with a mold residence of about 80 seconds to make specimens for physical property testing. Pellets were also molded under "abusive molding conditions", wherein the mold residence time was increased to 600 seconds.

The notched Izod impact performance, falling dart impact performance melt flow index and gloss of each of the compositions was measured as described above in Examples 9 and 10 and Comparative Example 5.

Results are set forth below in TABLE III, as Notched Izod Impact, expressed in J/m (foot pound force per inch ("ft-lb/in")) Abusive Molding Notched Izod Impact, expressed in J/m (foot pound force per inch ("ft-lb/in")), Dart Impact, expressed in J (foot pounds force ("ft-lb")), Melt Flow Index, expressed in grams per 10 minutes (g/10 min), and Gloss at 20°.

**TABLE III**

| | **Ex11** | **EX12** | **C6** |
|---|---|---|---|
| SAN-1 | 17.5 | 17.5 | 17.5 |
| Ex 6 | 17.5 | -- | -- |
| Ex 8 | | 17.5 | |
| C4 | -- | | 17.5 |
| PC-1 | 45 | 45 | 45 |
| PMMA-1 | 5 | 5 | 5 |
| PMMA-2 | 15 | 15 | 15 |

| ANTIOXIDANTS | 0.3 | 0.3 | 0.3 |
|---|---|---|---|
| **Properties** | | | |
| Notched Izod | | | |
| Impact (ft-lb/in) J/m | (7.0) 373.1 | (6.4) 341.1 | (6.2) 330.9 |
| Abusive Molding, | | | |
| Notched Izod | | | |
| Impact (ft-lb/in) J/m | (3.7) 197.2 | (1.9) 101.3 | (2.1) 111.9 |
| Dart Impact (ft-lb) J | (37.4) 197.2 | (37.8) 51.2 | (41.2) 55.9 |
| MFI (g/10 min) | 35.5 | 30.6 | 26.1 |
| Gloss at 20° | 85 | 85 | 86 |

The results set forth in TABLE III show that the composition of Example 11 is more resistant to the abusive molding conditions than the compositions of Example 12 and the composition of Comparative Example C6.

### Examples 13 and 14

### Example 13

A 7.57 l (two gallon) continuous reactor equipped with an agitator was charged with 4363.3 g of demineralized water, 1017 g of a surfactant solution containing 2.275 pbw sodium lauryl sulfate, 0.15 pbw tetrasodium pyrophosphate and 135 pbw water ("Surfactant Solution 2"), 658.6 g of buyl acrylate, 81.4 g of a solution of 0.5 triallyl cyanurate in 10.5 pbw butyl acrylate ("TAC Solution 2") and 112.2 g of an activator solution containing 0.1320 pbw sodium formaldehyde sulfoxylate, 0.025 Na₂EDTA, 0.005 pbw FeSO₄·7H₂O and 15 pbw water ("Activator Solution 2"). The reactor contents were purged with N₂ while the reactor contents were heated to 60°C (140°F) with continued agitation.

In order to initiate the reaction, 0.99 g of cumene hydroperoxide was introduced into to the heated, stirred contents of the reactor, which resulted in an exotherm within about two to ten minutes following the introduction.

Twenty minutes after the exotherm, feed streams of butyl acrylate (at a rate of 1975 g/hr), TAC Solution 2 (at a rate of 244 g/hr), cumene hydroperoxide (at a rate of 2.99 g/hr), Surfactant Solution 2 (at a rate of 3051 g/hr), and Activator Solution 2 (at a rate of 337 g/hr), were fed to a mixpot and the mixpot overflow was introduced to the reactor. A product stream began to flow from the reactor approximately 34 minutes after flow of the feed streams had been started

The temperature of the reaction mixture was maintained at 60°C (140°F) and feed streams were fed through the mixpot to the reactor for a time period of greater than 10 hours while a product stream containing poly(butyl acrylate) rubber particles flowed from the reactor.

The mean particle size of poly(butyl acrylate) rubber particles in the effluent product stream was monitored using a Spectronic® 20 spectrophotometer and is plotted in Figure 3 versus the time elapsed from the beginning of flow of the effluent product stream.

### Example 14

A 7.57 l (two gallon) continuous reactor equipped with an agitator was charged with 2202 g of demineralized water, 1.3 g of a 29.6 wt% aqueous solution of sodium lauryl sulfate, 2.8 g pbw tetrasodium pyrophosphate, and 375 g of a solution of 0.5 pbw triallyl cyanurate in 99.5 pbw butyl acrylate. The reactor contents were purged with N₂ while the reactor contents were heated to 60°C (140°F) with continued agitation.

In order to initiate the reaction, 284 g of an activator solution containing 0.1320 pbw sodium formaldehyde sulfoxylate, 0.025 Na₂EDTA, 0.005 pbw FeSO₄·7H₂O and 15 pbw water ("Activator Solution 3") was introduced into to the heated contents of the reactor, which resulted in an exotherm within 3 minutes.

Ten minutes after the exotherm, feed streams of a solution of 0.5 pbw triallyl cyanurate in 99.5 pbw butyl acrylate (at a rate of 2248 g/hr), cumene hydroperoxide (at a rate of 3.03 g/hr), a solution of 0.15 pbw tetrasodium pyrophosphate in 129.6 pbw water (at a rate of 1620 g/hr for the first 90 minutes and at a rate of 2916 g/hr thereafter), a surfactant solution containing 2.275 pbw sodium lauryl sulfate and 4.5 pbw water (at a rate of 172 g/hr) and Activator Solution 3 (at a rate 341 g/hr) were fed to a mixpot and the mixpot overflow was introduced to the reactor. A product stream began to flow from the reactor approximately 100 minutes after flow of the feed streams had been started.

The temperature of the reaction mixture was maintained at 60°C (140°F) and feed streams were pumped through the mixpot to the reactor for a time period of 10 hours while a product stream containing poly(butyl acrylate) rubber particles flowed from the reactor.

The mean particle size of poly(butyl acrylate) rubber particles in the effluent product stream was monitored using a Spectronic® 20 spectrophotometer and is plotted in Figure 3 versus the time elapsed from the beginning of flow of the effluent product stream.

Referring now to Figure 3, the particle size of the poly(butyl acrylate) latex produced by the process of Example 14 reaches the lower limit of the desired particle size range, that is, about 2500 x 10⁻¹⁰ m (Å) within about 2 hours of the initiation of the reaction, while the particle size of the poly(butyl acrylate) latex produced by the process of Example 13 reaches the lower limit of the desired particle size range more than 5 hours after initiation of the reaction. The process of Example 14 thus provides efficiency, in terms of both time and product yield, compared to the process of Example 13.

The continuous process of the present invention provides improved efficiency relative to a batch process and provides improved control of rubber particle size.

The impact modifier and molding composition of the present invention impart weatherability to articles molded form the molding composition.

## Claims

1. A process for making a poly(alkyl (meth)acrylate) rubber latex, comprising;
polymerizing, in a continuous emulsion polymerization process, one or more (C₁-C₁₂) alkyl (meth)acrylate monomers in an aqueous medium and in the presence of a surfactant according to the formula:
R-SO₃M
wherein R is alkyl or alkoxyl, and M is a hydrogen radical or a cation.

2. The process of claim 1, wherein the continuous emulsion polymerization is carried out in a reactor and wherein feed streams of reactants and reaction media, including water, the monoethylenically unsaturated (C₁-C₁₂) alkyl (meth)acrylate monomer, the surfactant, a polyethylenically unsaturated monomer and a polymerization initiator are fed to the reactor while the reactor is maintained under emulsion polymerization conditions and an aqueous product stream, comprising an poly(alkyl(meth)acrylate) rubber latex, flows from the reactor.

3. The process of claim 2, wherein the reactor defines an internal reactor volume, the feed streams are fed to the reactor at a combined flow rate, on an hourly basis, that is equal to the product of a factor of from 0.3 to 2.0 multiplied by the internal volume of the reactor.

4. The process of claim 1, wherein the (C₁-C₁₂) alkyl (meth)acrylate comprises butyl acrylate.

5. The process of claim 1, wherein the surfactant is selected from the group consisting of sodium lauryl sulfate, sodium decyl sulfate, sodium 2-ethylhexyl sulfate, potassium lauryl sulfate, ammonium lauryl sulfate, diethanol ammonium lauryl sulfate, tetraethanol ammonium lauryl sulfate, sodium eicosyl sulfonate and sodium paraffin sulfonate and mixtures thereof.

6. The process of claim 2, wherein the polyethylenically unsaturated monomer comprises triallyl cyanurate.

7. The process of claim 2, wherein the initiator comprises a redox initiator system, said redox initiator system comprising cumene hydroperoxide and sodium formaldehyde sulfoxylate

8. A graft copolymer, comprising a discontinuous poly(C₁-C₁₂) alkyl(meth)-acrylate rubber phase and a rigid thermoplastic phase, wherein the poly(alkyl (meth)acrylate) rubber phase is obtained by the process of claim 1 and at least a portion of rigid thermoplastic phase is chemically grafted to the poly(alkyl (meth)acrylate) rubber phase.

9. The graft copolymer of claim 8, wherein the rigid thermoplastic phase comprises a styrene-acrylonitrile copolymer, an α-methyl styrene-acrylonitrile copolymer or a mixture thereof.

10. A molding composition, comprising a thermoplastic resin and a graft copolymer according to claim 8, wherein the graft copolymer is present in an amount of from 5 to 35 pbw poly(alkyl(meth)acrylate) rubber per 100 pbw of the composition, effective to improve the impact resistance of articles molded from the molding composition and the thermoplastic resin is selected from the group consisting of vinyl halide resins, (meth)acrylate resins, vinyl aromatic resins, polycarbonate resins, polyester carbonate resins, polyester resins, poly - phenylene oxide resins and mixtures thereof.

## Patentansprüche

1. Verfahren zur Herstellung eines Poly(alkyl(meth)acrylat)kautschuklatex, bei dem man;
in einem kontinuierlichen Emulsionspolymerisationsverfahren ein oder mehrere (C₁-C₁₂)Alkyl(meth)acrylatmonomere in einem wässrigen Medium und in Gegenwart eines Tensids gemäß der Formel :
R-SO₃M
polymerisiert, wobei R Alkyl oder Alkoxyl ist und M ein Wasserstoffrest oder ein Kation ist.

2. Verfahren nach Anspruch 1, **dadurch gekennzeichnet, dass** die kontinuierliche Emulsionspolymerisation in einem Reaktor durchgeführt wird und dass man Einspeiseströme der Reaktanten und des Reaktionsmediums, umfassend Wasser, das monoethylenisch ungesättigte (C₁-C₁₂)Alkyl(meth)acrylatmonomer, das Tensid, ein polyethylenisch ungesättigtes Monomer und einen Polymerisationsinitiator in den Reaktor einspeist, während der Reaktor auf Emulsionspolymerisationsbedingungen gehalten wird und ein wässriger Produktstrom, der einen Poly(alkyl(meth)acrylat)kautschuklatex aufweist, aus dem Reaktor abfließt.

3. Verfahren nach Anspruch 2, **dadurch gekennzeichnet, dass** durch den Reaktor ein inneres Reaktorvolumen definiert wird, die Einspeiseströme in den Reaktor mit einer kombinierten Durchsatzmenge, bezogen auf eine stündliche Basis, eingespeist werden, die gleich dem Produkt aus einem Faktor von zwischen 0,3 - 2,0 multipliziert mit dem inneren Volumen des Reaktors ist.

4. Verfahren nach Anspruch 1, **dadurch gekennzeichnet, dass** das (C₁-C₁₂)Alkyl(meth)acrylat Butylacrylat aufweist.

5. Verfahren nach Anspruch 1, **dadurch gekennzeichnet, dass** das Tensid ausgewählt ist aus der Gruppe bestehend aus Natriumlaurylsulfat, Natriumdecylsulfat , Natrium-2-ethylhexylsulfat, Kaliumlaurylsulfat, Ammoniumlaurylsulfat, Diethanolammoniumlaurylsulfat, Tetraethanolammoniumlaurylsulfat, Natriumeicosylsulfonat und Natriumparaffinsulfonat und Mischungen daraus.

6. Verfahren nach Anspruch 2, **dadurch gekennzeichnet, dass** das polyethylenisch ungesättigte Monomer Triallylcyanurat aufweist.

7. Verfahren nach Anspruch 2, **dadurch gekennzeichnet, dass** der Initiator ein Redoxinitiatorsystem aufweist, wobei das Redoxinitiatorsystem Cumolhydroperoxid und Natriumformaldehydsulfoxylat aufweist.

8. Ein Propfcopolymer aufweisend eine diskontinuierliche Poly(C₁-C₁₂)alkyl(meth)-acrylatkautschukphase und eine harte thermoplastische Phase, wobei die Poly(alkyl(meth)acrylat)kautschukphase gemäß einem Verfahren nach Anspruch 1 erhalten wird und wenigstens ein Teil der harten thermoplastischen Phase chemisch auf die Poly(alkyl(meth)acrylat)kautschukphase gepfropft ist.

9. Propfcopolymer nach Anspruch 8, **dadurch gekennzeichnet, dass** die harte thermoplastische Phase ein Styrol-Acrylnitril-Copolymer, ein α-Methylstyrol-Acrylnitril-Copolymer oder eine Mischung daraus aufweist.

10. Formmasse aufweisend ein thermoplastisches Harz und ein Pfropfcopolymer gemäß Anspruch 8, wobei das Pfropfcopolymer in einer zur Verbesserung der Schlagzähigkeit von Gegenständen, die aus der Formmasse geformt sind, wirksamen Menge von 5 - 35 Gewichtsteilen (pbw) Poly(alkyl(meth)acrylat)kautschuk pro 100 Gewichtsteilen (pbw) der Masse vorliegt und das thermoplastische Harz ausgewählt ist aus der Gruppe bestehend aus Vinylhalogenidharzen, (Meth)acrylatharzen, aromatischen Vinylharzen, Polycarbonatharzen, Polyestercarbonatharzen, Polyesterharzen, Polyphenylenoxidharzen und Mischungen daraus.

## Revendications

1. Procédé pour fabriquer un latex caoutchouteux de poly((méth)acrylate d'alkyle), comprenant :
la polymérisation, dans un procédé de polymérisation en émulsion en continu, d'un ou de plusieurs monomères (méth)acrylate d'alkyle en C₁-C₁₂ dans un milieu aqueux et en présence d'un tensioactif répondant à la formule :
R-SO₃-M
dans laquelle R représente un groupe alkyle ou alcoxy et M représente un atome d'hydrogène ou un cation.

2. Procédé selon la revendication 1, dans lequel on effectue la polymérisation en émulsion en continu, dans un réacteur et dans lequel on introduit les courants d'alimentation de réactifs et de milieu réactionnel, y compris l'eau, le monomère (méth)acrylate d'alkyle en C₁-C₁₂ à insaturation monoéthylénique, le tensioactif, un monomère à insaturation polyéthylénique et un amorceur de polymérisation dans le réacteur tout en maintenant le réacteur dans des conditions de polymérisation en émulsion, et un courant de produit aqueux comprenant un latex caoutchouteux de poly((méth)acrylate d'alkyle) s'écoule du réacteur.

3. Procédé selon la revendication 2, dans lequel le réacteur définit un volume de réacteur intérieur, on introduit les courants d'alimentation dans le réacteur à une vitesse d'écoulement combinée, sur une base horaire, qui est égale au produit d'un facteur de 0,3 à 2,0 multiplié par le volume intérieur du réacteur.

4. Procédé selon la revendication 1, dans lequel le (méth)acrylate d'alkyle en C₁-C₁₂ comprend l'acrylate de butyle.

5. Procédé selon la revendication 1, dans lequel le tensioactif est choisi dans l'ensemble constitué par le laurylsulfate de sodium, le décylsulfate de sodium, le 2-éthylhexylsulfate de sodium, le laurylsulfate de potassium, le laurylsulfate d'ammonium, le laurylsulfate de diéthanol-ammonium, le laurylsulfate de tétraéthanol-ammonium, l'eicosylsulfonate de sodium et le paraffine-sulfonate de sodium, et leurs mélanges.

6. Procédé selon la revendication 2, dans lequel le monomère à insaturation polyéthylénique comprend le triallylcyanurate.

7. Procédé selon la revendication 2, dans lequel l'amorceur comprend un système amorceur oxydant-réducteur, ledit système amorceur oxydant-réducteur comprenant un hydroperoxyde de cumène et un formaldéhyde-sulfoxylate de sodium.

8. Copolymère de greffage, comprenant une phase caoutchouteuse poly((méth)acrylate d'alkyle en C₁-C₁₂) discontinue et une phase thermoplastique rigide, dans lequel on obtient une phase caoutchouteuse poly((méth)acrylate d'alkyle) par le procédé selon la revendication 1 et on greffe par voie chimique au moins une partie de phase thermoplastique rigide à la phase caoutchouteuse poly((méth)acrylate d'alkyle).

9. Copolymère de greffage selon la revendication 8, dans lequel la phase thermoplastique rigide comprend un copolymère styrène/acrylonitrile, un copolymère α-méthylstyrènelacrylonitrile ou un mélange de ces derniers.

10. Composition de moulage, comprenant une résine thermoplastique et un copolymère de greffage selon la revendication 8, dans laquelle le copolymère de greffage est présent en une quantité de 5 à 35 % en poids de caoutchouc de poly((méth)acrylate d'alkyle) pour 100 % en poids de la composition, qui est efficace pour améliorer la résistance au choc des articles moulés à partir de la composition de moulage, et la résine thermoplastique est choisie dans l'ensemble constitué par les résines d'halogénure de vinyle, les résines de (méth)acrylate, les résines vinyl-aromatiques, les résines polycarbonate, les résines polyester-carbonate, les résines polyester, les résines poly(oxyde de phénylène), et leurs mélanges.
